# EUROPEAN PATENT APPLICATION

(11) **EP 1 166 838 A2**
(43) Date of publication of application: **02.01.2002**
(21) Application number: 01305598.3
(22) Date of filing: 27.06.2001
(51) Int. Cl.: A63F 13/04

(54) **Shooting game apparatus**

(30) Priority: 30.06.2000 JP 2000199781
(71) Applicant: Namco Ltd., Tokyo (JP)
(72) Inventor: Makino, Shinya, Tokyo (JP); Yonemura, Hidehiko, Tokyo (JP)
(74) Representative: Read, Matthew Charles

(57) **Abstract**

There is provided a shooting game apparatus that allows the score to be known while the game is in progress even if the player is unfamiliar with the game, and that also further increases the fun to be had from playing the game when the player is shooting a plurality of targets displayed at the same time. The shooting game apparatus involves firing at a target (39) using an imitation pistol and comprises: display section capable of displaying the target (39) as well as the points (49a) for the target (39); determining section for determining whether or not the target (39) has been hit by a shot from the imitation pistol; and calculating section for calculating a score based on the points (49a) of the targets (39) hit using the imitation pistol.

## Description

### BACKGROUND OF THE INVENTION

### Field of the Invention

The present invention relates to a shooting game apparatus for shooting a target using an imitation pistol.

### Description of the Related Art

An example of an invention relating to a shooting game apparatus for shooting a target using an imitation pistol is disclosed in Japanese Patent No. 2763341. In this shooting game apparatus, when a player fires an imitation pistol at a target, a determination is made as to whether or not the target has been hit and if it is determined that the target has been hit, the target is overturned so that the visual effect is increased.

In this type of conventional shooting game apparatus, the only thing depicted are the targets. Moreover, as the points that are scored when a target is hit are set at a predetermined fixed number, the score is raised or lowered only according to how often the targets can be hit.

However, if the game apparatus is one such as this in which the score is only raised or lowered according to how often a target can be hit, the player needs to remain looking at the targets while the game is in play. Therefore, it is not possible for a player to find out the score while the game is in progress, particularly if the player is one who is not familiar with the game, and the player is only able to find out his or her score when the game is over. Therefore, the drawback in this game is that the player is not able to play the game while having the thrill of seeing whether or not he or she can reach a particular target score.

In addition, because the targets all have the same points, when shooting a plurality of targets displayed at the same time, because the order in which the targets are aimed at has no bearing on the game, the drawback is that the interest that could be provided by this aspect of the game is lacking.

### SUMMARY OF THE INVENTION

Accordingly, it is an aim of the present invention to provide a shooting game apparatus that allows the score to be known while the game is in progress even if the player is unfamiliar with the game, and that also further increases the fun to be had from playing the game when the player is shooting a plurality of targets displayed at the same time.

In order to achieve the above aims, the first aspect of the present invention is a shooting game apparatus for shooting a target using an imitation pistol comprises: display section which is capable of displaying the target as well as points for the target; determining section which determines whether or not the target has been hit by a shot from the imitation pistol; and calculating section which calculates a score based on the points of the targets hit using the imitation pistol.

In this way, because the display section displays the points of the target together with the target, even a player who is unfamiliar with the game is able to know the score he or she is acquiring from the points displayed in each target while the game is in progress. Accordingly, the player is able to play the game while feeling the thrill of seeing whether or not he or she can reach the target score. As a result, the amount of interest generated by the game is greatly increased.

In addition, because the display section displays the points of the target together with the target, if, for example, a player is able to fire at a plurality of simultaneously displayed targets while different points are displayed in each target, then the score differs depending on the order in which the targets are aimed at. Accordingly, the interest generated by the game is increased even more.

The second aspect of the present invention is the shooting game apparatus according to the first aspect, wherein the display section always has a plurality of display cycles of the target in a single game and the display time of the target in a single display cycle is restricted to a predetermined time.

In this way, because the display section always has a plurality of display cycles of the target in a single game and the display time of the target in one display cycle is restricted to a predetermined time, if, for example, a player is able to fire at a plurality of displayed targets while different points are displayed in each target, then, because the time is restricted, the score always differs depending on the order in which the targets are aimed at. Accordingly, the interest generated by the game is increased still further.

The third aspect of the present invention is the shooting game apparatus according to the first aspect, wherein the display section is capable of altering the points for the target that are displayed together with the target even in the same target.

In this way, because the display section is able to alter the display of the points of the target that are displayed together with the target even in the same target, it is possible to give different points to the same target preventing a player from being able to memorize the points of each one of the targets. Accordingly, the interest generated by the game is increased still further.

The fourth aspect of the present invention is the shooting game apparatus according to the third aspect, wherein the display section alters the points of the target that are displayed together with the target in accordance with a number of hits from the imitation pistol or with a result of the calculation of the score by the calculating section.

In this way, because, in accordance with the number of hits by the imitation pistol or with the result of the score calculation by the calculation section, the display section alters the points of the target that are displayed together with the target, then, for example, if the score partway through as calculated by the calculation section is low or if the number of hits partway through by the imitation pistol is few, by altering the points of the target displayed thereafter so that they are higher or the like, it becomes possible even for a player unfamiliar with the game to achieve a reasonably high score.

The fifth aspect of the present invention is the shooting game apparatus according to the first aspect, wherein, in accordance with the points, the display section changes a form of a target even in the same target.

In this way, because the display section changes the form in accordance with the points even in the same target, the player is able to recognize the points even in the form of the target.

The sixth aspect of the present invention is the shooting game apparatus according to the first aspect, wherein there is provided an external output section for outputting signals to the outside based on the score calculated by the calculating section.

In this way, because there is provided an external output section for outputting to the outside a signal based on the score calculated by the calculation section, by connecting the prize payout apparatus to the external output section, for example, it is possible for a prize to be paid out by the prize payout apparatus when the score calculated by the calculation section is above a predetermined score. Alternatively, by connecting the external output section to a storage medium, it is possible to store information relating to the score in the storage medium. Accordingly, the interest generated by the game is increased still further.

The seventh aspect of the present invention is the shooting game apparatus according to the sixth aspect, further comprising a prize payout section which is connected to the external output section.

In this way, because the prize payout apparatus is connected to the external output section, for example, it is possible for a prize to be paid out by the prize payout apparatus when the score calculated by the calculation section is above a predetermined score. Accordingly, the interest generated by the game is increased still further.

The eighth aspect of the present invention is the shooting game apparatus according to the seventh aspect, wherein there is provided an operation section which inputs a choice made between whether to have a prize paid out or whether to continue a game, and when a signal indicating that continuing the game has been chosen is output from the operation section, the game in which the target is hit using the imitation pistol is continued.

In this way, because the game in which the targets are hit using the imitation pistol is continued if a signal is output from the operation section to the effect that the player has chosen to continue playing the game, the number of choices available is increased to two, namely, whether to continue the game or receive a prize. Accordingly, the interest generated by the game is increased still further.

The ninth aspect of the present invention is the shooting game apparatus according to the eighth aspect, wherein when a signal indicating that continuing the game has been chosen is output from the operation section, the calculating section calculates a score by adding points after the output of the signal to a score before the output of the signal.

In this way, if a signal is output from the operation section to the effect that the player has chosen to continue playing the game, because the calculation section calculates the score by adding the points after this signal output to the score before this signal output, it is possible when a game is continued for the score as well to be continued and added on to the previous score. As a result, because, when the game is continued, it is possible for it to be treated as a follow on of the previous game, the interest generated by the game is increased still further.

The tenth aspect of the present invention is the shooting game apparatus according to the first aspect, wherein the display section comprises: a picture panel on which the target is depicted and which faces towards the front; light irradiating section which irradiates light from the rear of the picture panel and causes the target to be displayed towards the front; points display section that is positioned further to the front than the picture panel and at right angles to the picture panel and displays points; and a half mirror that is positioned to the front than the picture panel and intersecting the picture panel and causes the points displayed by the points display section to be displayed towards the front.

In this way, because the display section displays the target by irradiating light from the rear of the picture panel, which faces the front, using the irradiating section, and displays points using the points display section provided further to the front than the picture panel and at right angles to the picture panel, and also uses the half mirror to display these facing towards the front, no shadow from the points display section appears on the picture panel because of the light irradiated by the irradiating section. Accordingly, it is possible for both the target and the points to be displayed clearly.

### BRIEF DESCRIPTION OF THE DRAWINGS

FIG. 1 is a perspective view showing the shooting game apparatus and the prize payout apparatus to which it is connected of the first embodiment of the present invention.
FIG. 2 is a block diagram showing the control system of the shooting game apparatus and the prize payout apparatus to which it is connected of the first embodiment of the present invention.
FIG. 3 is a partially exploded perspective view showing a target display portion (the plate members are not shown) of the shooting game apparatus of the first embodiment of the present invention.
FIG. 4 is a plan view showing a target display portion of the shooting game apparatus of the first embodiment of the present invention.
FIG. 5 is a frontal view showing a target display portion (the plate members are not shown) of the shooting game apparatus of the first embodiment of the present invention.
FIG. 6 is a side view showing a target display portion of the shooting game apparatus of the first embodiment of the present invention.
FIG. 7 is a frontal view showing the points addition display state of a target display portion of the shooting game apparatus of the first embodiment of the present invention.
FIG. 8 is a frontal view showing the addition hit display state of a target display portion of the shooting game apparatus of the first embodiment of the present invention.
FIG. 9 is a frontal view showing the points subtraction display state of a target display portion of the shooting game apparatus of the first embodiment of the present invention.
FIG. 10 is a frontal view showing the subtraction hit display state of a target display portion of the shooting game apparatus of the first embodiment of the present invention.
FIG. 11 is a partially enlarged frontal view of a plate member of a target display portion of the shooting game apparatus of the first embodiment of the present invention.
FIG. 12 is a cross-sectional view from the side of the shooting game apparatus and the prize payout apparatus to which it is connected of the first embodiment of the present invention.
FIG. 13 is a cross-sectional view from the top of the shooting game apparatus and the prize payout apparatus to which it is connected of the first embodiment of the present invention.
FIG. 14 is a block diagram showing the control system of the shooting game apparatus of the second embodiment of the present invention.

### DETAILED DESCRIPTION OF THE PREFERRED EMBODIMENTS

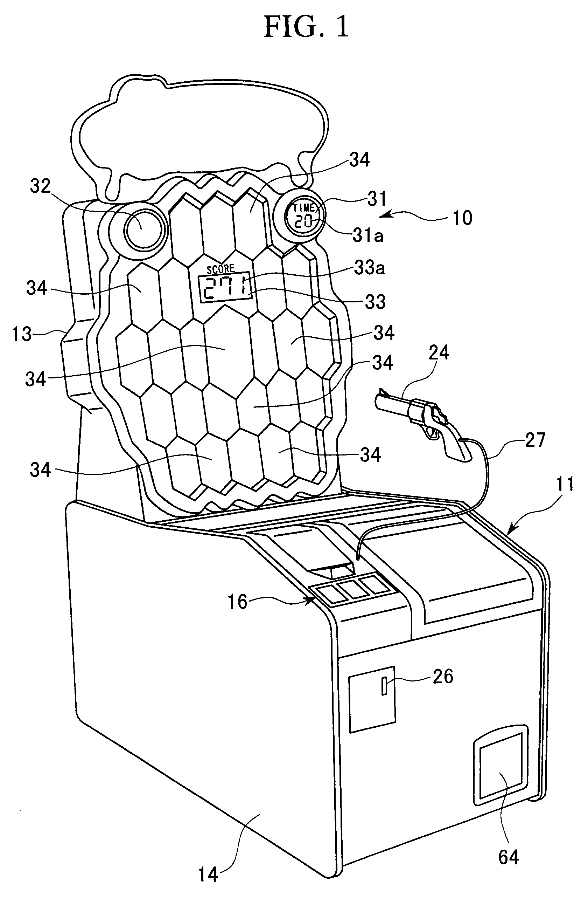

The shooting game apparatus of the first embodiment of the present invention will now be described with reference made to FIGS. 1 to 13.

This shooting game apparatus 10 is what is known as an arcade game and is installed in an amusement arcade or the like. As is shown in FIG. 1, the outward appearance of the shooting game apparatus 10 shows it as integrated with a prize payout apparatus 11 that pays out a prize.

The shooting game apparatus 10 is formed with a display panel 13 provided at the top portion thereof and a main portion 14 provided below the display panel 13 and extending towards the front thereof (i.e. towards the position where the player is located - the same arrangement is also applicable in the description below). The prize payout apparatus 11 is provided to the right hand side when seen from the front of the main portion 14 and aligned with the main portion 14.

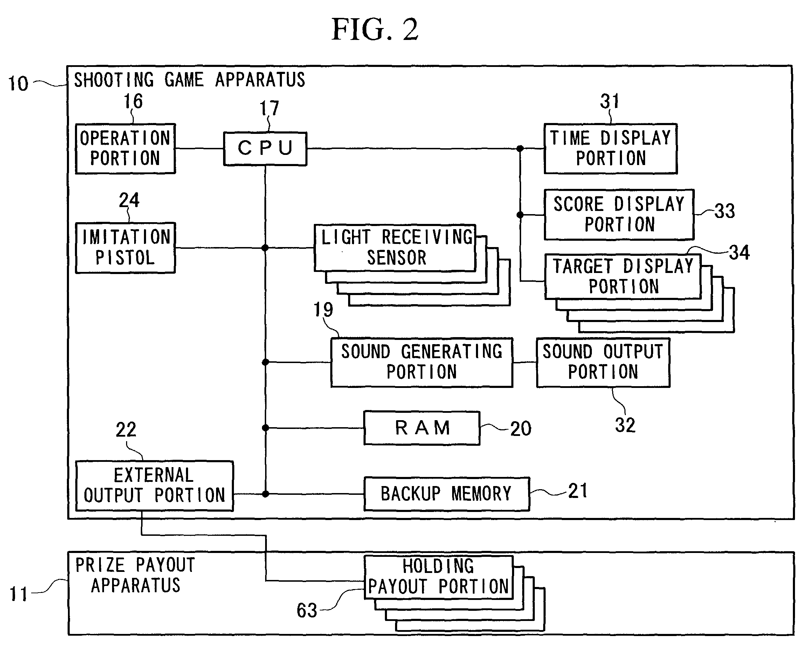

The control system of the shooting game apparatus 10 is formed as is shown in FIG. 2 and comprises: an operation portion 16 into which operational input is made by a player; a CPU (determining sections and calculating sections) 17 that receives the respective operation signals that are output in accordance with the operational input into the operation portion 16; a sound generating portion 19 that generates sound under the control of the CPU 17; RAM 20 for storing the data calculated by the CPU 17 and the like; backup memory 21 for backing up data and the like; and an external output portion 22 that is capable of being connected to an external apparatus and outputs signals from the CPU 17 to a connected external apparatus. The prize payout apparatus 11 is connected to the external output portion 22.

An imitation pistol 24 is also connected to the CPU 17. The supply of power to the imitation pistol 24 is controlled by the CPU 17 and a signal is also output to the CPU 17 when the trigger of the imitation pistol 24 is pulled.

As is shown in FIG. 1, the above described operation portion 16 into which operational input is made by the player that includes a coin insertion portion 26 into which coins are inserted by the player is provided to the front of the main portion 14. The imitation pistol 24 is provided adjacent to the operation portion 16. The imitation pistol 24 is joined via a tube 27 to the main portion 14 and is able to be freely attached to or removed from the main portion 14. A light emitting portion (not illustrated) for emitting light from the muzzle towards the front is provided inside the muzzle of the imitation pistol 24 and this light emitting portion emits light in accordance with the operation of the trigger.

A time display portion 31 for displaying the remaining time 31a (optionally a two digit number) in the game is provided at the upper right side of the display panel 13, while a sound output portion 32 for outputting sound is provided at the upper left portion thereof. At a position between and slightly below these is provided a score display portion 33 for displaying the hitherto acquired total score 33a (optionally a three digit number), while a plurality of target display portions (display sections) 34 are provided around the score display portion 33. Note that the displays of the time display portion 31, the score display portion 33, and each of the target display portions 34 are performed based on signals output from the CPU 17. Note also that sound is output from the sound output portion 32 based on signals output from the sound generating portion 19.

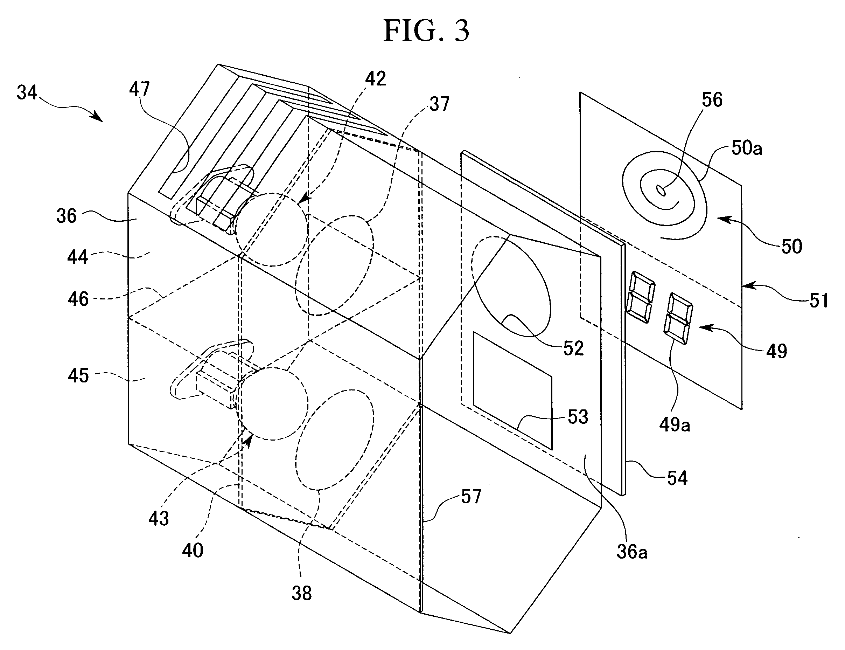

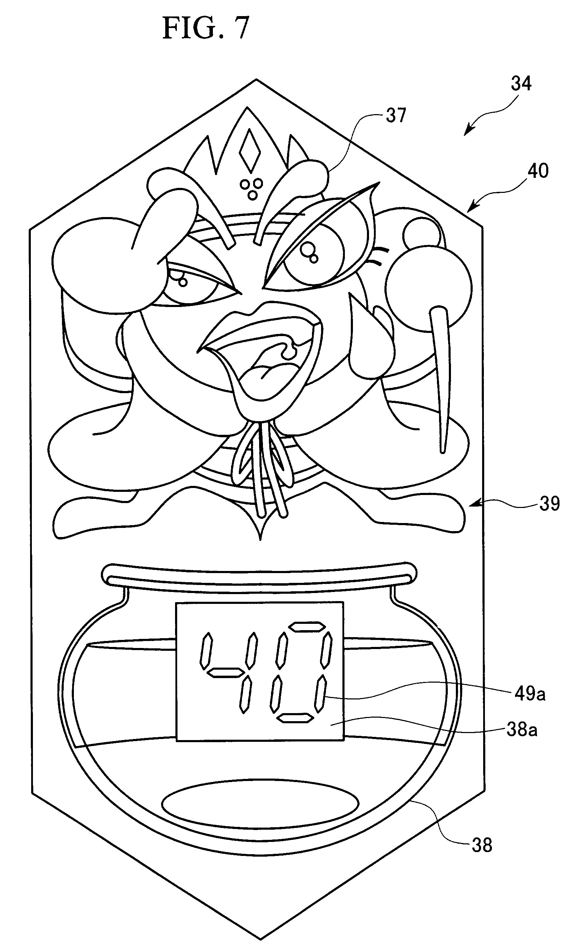

As is shown in FIGS. 3 to 6, each of the target display portions 34 is provided with a casing 36 that is formed as a hexagonal cylinder and is attached to the display panel 13 such that the direction of the through hole of the cylinder extends in the forward - rearward direction, and a picture panel 40 on which is depicted a target 39, shown in FIG. 7, comprising a first target portion (specifically, a picture of a hornet) 37 and a second target portion (specifically, a picture of a basin) 38, that is provided inside the casing 36 facing towards the front and is divided into a top portion and a bottom portion.

Each target display portion 34 is provided with a first irradiation portion (light irradiation section) 42 that is positioned at the rear side (i.e. at the back surface side) of the first target portion 37 of the picture panel 40 and includes an incandescent lamp for irradiating light from the rear onto the first target portion 37 so as to display the first target portion 37 in illumination facing towards the front or to extinguish the first target portion 37 by stopping the irradiation of the light. Each target display portion 34 is also provided with a second irradiation portion (light irradiation section) 43 that is positioned at the rear side (i.e. at the back surface side) of the second target portion 38 of the picture panel 40 and includes an incandescent lamp for irradiating light from the rear onto the second target portion 38 so as to display the second target portion 38 in illumination facing towards the front or to extinguish the second target portion 38 by stopping the irradiation of the light. The first irradiation portion 42 and the second irradiation portion 43 switch between being lit and being extinguished based on signals output from the CPU 17.

Each target display portion 34 is also provided with a partition plate 46 for partitioning the portion to the rear of the picture panel 40 of the casing 36 into a first compartment 44 in which the first irradiation portion 42 is housed and a second compartment 45 in which the second irradiation portion 43 is housed. By separating the first target portion 37 and the second target portion 38, the partition plate 46 also prevents the light from the first irradiation portion 42 from shining onto the second target portion 38 and prevents the light from the second irradiation portion 43 from shining onto the first target portion 37. Heat discharge apertures 47 are formed at the portions of the casing 36 where the first compartment 44 and the second compartment 45 are formed.

In addition, each target display portion 34 is provided with a points display portion (points display section) 49 that is positioned at one side surface 36a of the casing 36 and towards the front side of the picture panel 40 and that is also positioned at a right angle to the picture panel 40. The points display portion 49 includes an LED for displaying the points (optionally a two digit number) 49a in illumination. Each target portion 34 is also provided with a hit display portion 50 that is positioned above the points display portion 49 and includes an LED for displaying in illumination the hits 50a on the target 39 (specifically, in the form of a picture of a spiral). The points display portion 49 switches between being lit and being extinguished based on signals output from the CPU 17. When the points display portion 49 is lit, the points 49a are also changed based on signals output from the CPU 17. The hit display portion 50 also switches between being lit and being extinguished based on signals output from the CPU 17.

The points display portion 49 and the hit display portion 50 are provided on a single base plate 51. The base plate 51 is attached to the outer side of the side surface 36a of the casing 36 via a concealing plate 54 formed from smoked acrylic or the like with the hit display portion 50 and the points display portion 49 aligned with the windows 52 and 53 formed in the side surface 36a of the casing 36.

Here, a light receiving sensor (determining section) 56 for detecting light irradiated from the imitation pistol 24 is provided at a central position of the hit display portion 50 that is provided in the side surface 36a of the casing 36 of each target display portion 34. When the light receiving sensor 56 detects light irradiated from the imitation pistol 24, a signal indicating that fact is output to the CPU 17. The CPU 17 determines whether or not the target 39 has been hit by the imitation pistol 24 based on the presence or otherwise of this signal.

Moreover, each target display portion 34 is provided with a half mirror 57 positioned to the front of the picture panel 40 inside the casing 36 and intersecting the picture panel 40 at a predetermined angle (45 degrees). By displaying towards the front when required the points 49a that are displayed from the side by the points display portion 49 and the hit display 50a that is displayed from the side by the hit display portion 50, the half mirror 57 synthesizes these (i.e. causes them to appear as overlapping) with the target 39 of the picture panel 40. The half mirror 57 also directs light emitted in the direction of the target 39 from the imitation pistol 24 in the direction of the light receiving sensor 56 positioned at the side. Note that if light is accurately emitted in the direction of the first target portion 37 of the target 39 from the imitation pistol 24, the light that is reflected by the half mirror 57 is received by the light receiving sensor 56.

In a target display portion 34 such as this, if, for example, the points 49a are displayed lit up by the points display portion 49 while the hit display 50a is turned off by the hit display portion 50 with the first target portion 37 being displayed while it is lit up by the first irradiating portion 42 and the second target portion 38 being displayed while it is lit up by the second irradiating portion 43, then, as is shown in FIG. 7, when seen from the front, the first target portion 37 is displayed in illumination at the top while the second target portion 38 is displayed in illumination at the bottom and the points 49a are displayed in illumination in the non-picture portion 38a that is formed without a picture within the outline of the picture of the second target portion 38. In this state, if a player fires the imitation pistol 24 at the target 39 and the light receiving sensor 56 detects the light emitted from the imitation pistol 24, then the above described state becomes the points addition display state, in which the displayed points are added to the score obtained up till that time. Here, each target display portion 34 is capable of allowing the points 49a of the target 39 that are displayed together with the target 39 to be altered, for example, to "10", "20", 30", or "40" in the same target 39 (i.e. in the same position). Note that, because a half mirror 57 is used, the points 49a in the points display portion 49 are displayed in reverse in the left - right direction.

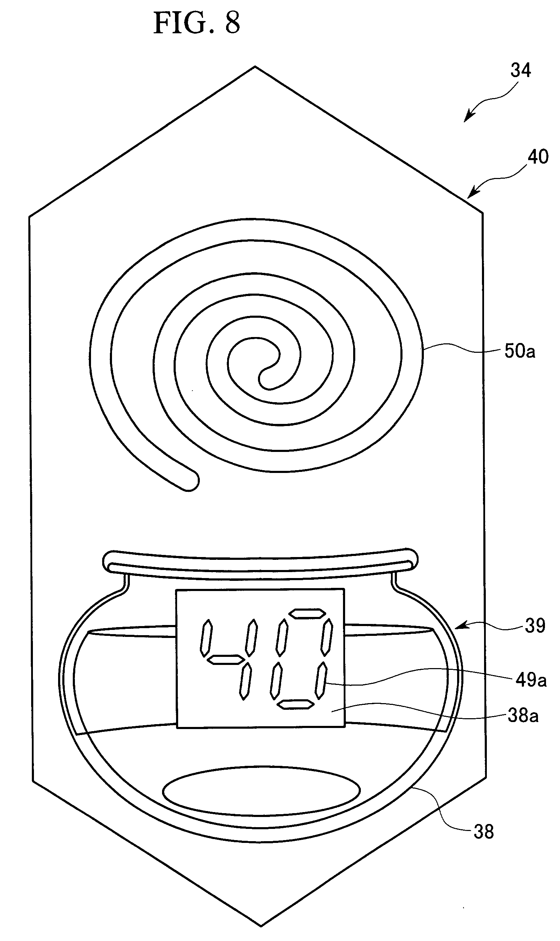

Furthermore, if, for example, the points 49a are displayed flashing on and off by the points display portion 49 while the hit display 50a is turned on by the hit display portion 50 with the first target portion 37 turned off by the first irradiating portion 42 and the second target portion 38 being displayed while it is lit up by the second irradiating portion 43, then, as is shown in FIG. 8, when seen from the front, only the hit display 50a is displayed in illumination at the top while the second target portion 38 is displayed in illumination at the bottom and the score 49a is displayed flashing on and off in the non-picture portion 38a of the second target portion 38. This state becomes the addition hit display state indicating that, in the above described points addition display state, the light receiving sensor 56 has detected light emitted from the imitation pistol 24.

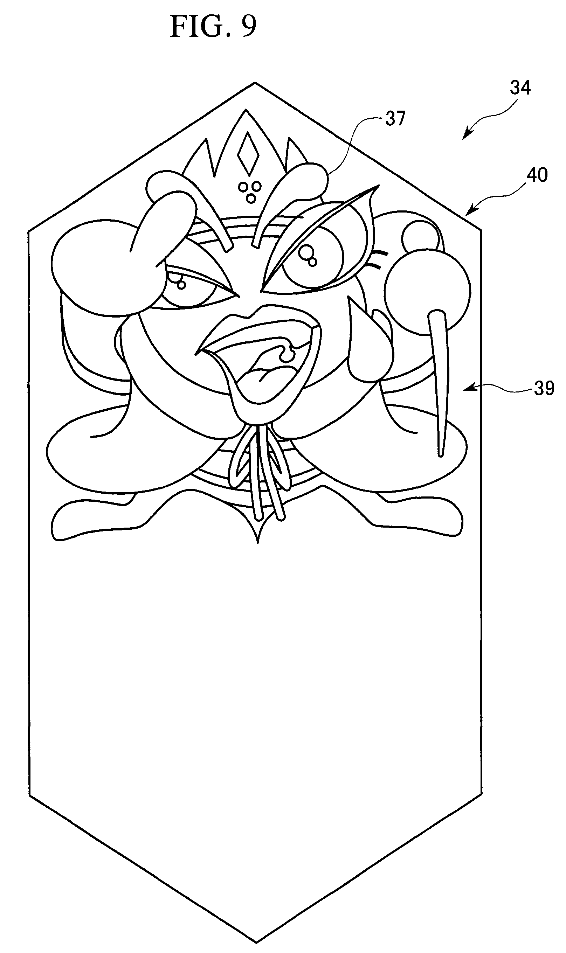

Furthermore, if the points 49a are turned off by the points display portion 49 while the hit display 50a is turned off by the hit display portion 50 with the first target portion 37 being displayed while it is lit up by the first irradiating portion 42 and the second target portion 38 being turned off by the second irradiating portion 43, then, as is shown in FIG. 9, when seen from the front, only the first target portion 37 is displayed in illumination. In this state, if a player fires the imitation pistol 24 at the target 39 and the light receiving sensor 56 detects the light emitted from the imitation pistol 24, then the above described state becomes the points subtraction display state, in which a predetermined fixed number of points are subtracted and also becomes the notification display state when sound notification is generated for the player. Note that, in this points subtraction display state and in the above described points addition display state, or to put it in other words, in accordance with the points (below a predetermined point (0 points) and above a predetermined point), the form of the target is changed into two types even in the same target 39 (namely, in the same position).

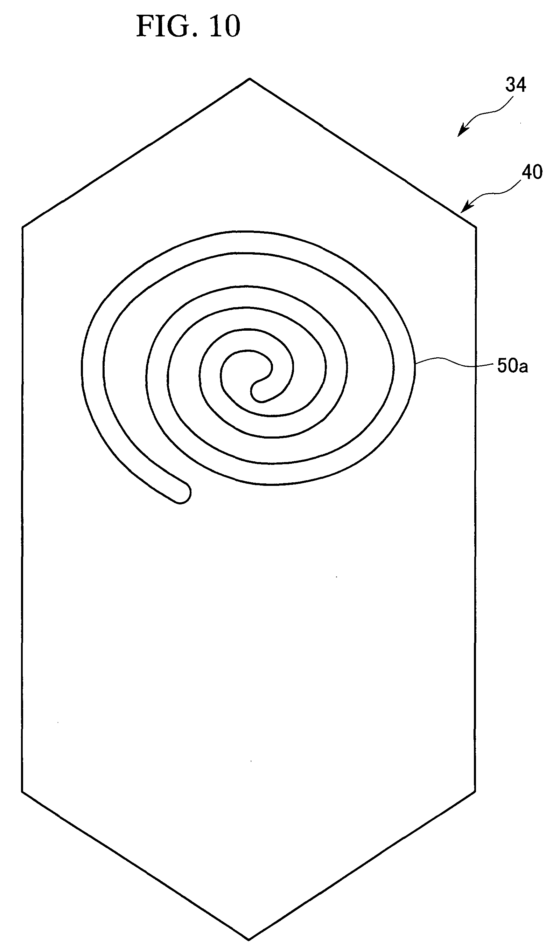

Furthermore, if the points 49a are turned off by the points display portion 49 and the hit display 50a is displayed while being lit up by the hit display portion 50 with the first target portion 37 being turned off by the first irradiating portion 42 and the second target portion 38 being turned off by the second irradiating portion 43, then, as is shown in FIG. 10, when seen from the front, only the hit display 50a is displayed in illumination. This state becomes the subtraction hit display state indicating that, in the above described points subtraction display state, the light receiving sensor 56 has detected light emitted from the imitation pistol 24.

As described above, each of the target display portions 34 is capable of displaying the target 39 on which a picture is depicted and is capable of displaying the individual points 49a of the target 39 together with the target 39 (specifically, within the outline of the target 39).

Moreover, in each target display portion 34, the first target portion 37 and the second target portion 38 of the target 39 are each individually able to be switched selectively between a display state and an off state. In addition, the individual points 49a of the target 39 is able to be switched selectively between a display state, an off state, and a flashing state.

Note that the state in which none of the first target portion 37, the second target portion 38, the points display portion 49, and the hit display portion 50 are displayed in illumination is called the non-display state. In the target display portion 34 in this non-display state, the light receiving function of the light receiving sensor 56 provided in the target display portion 34 is also made invalid.

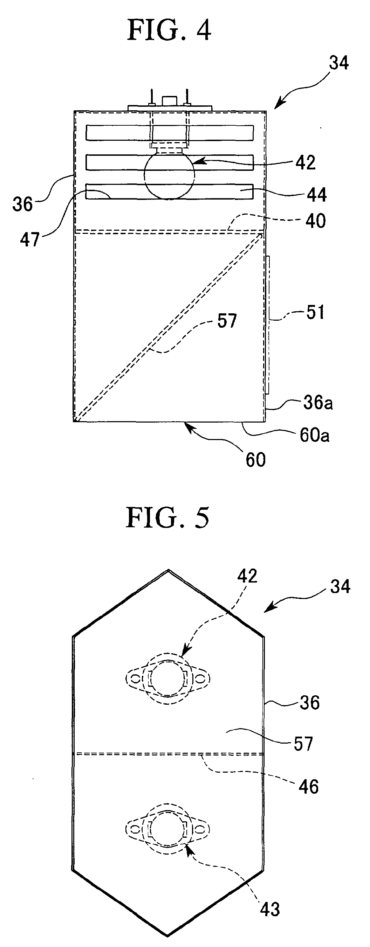

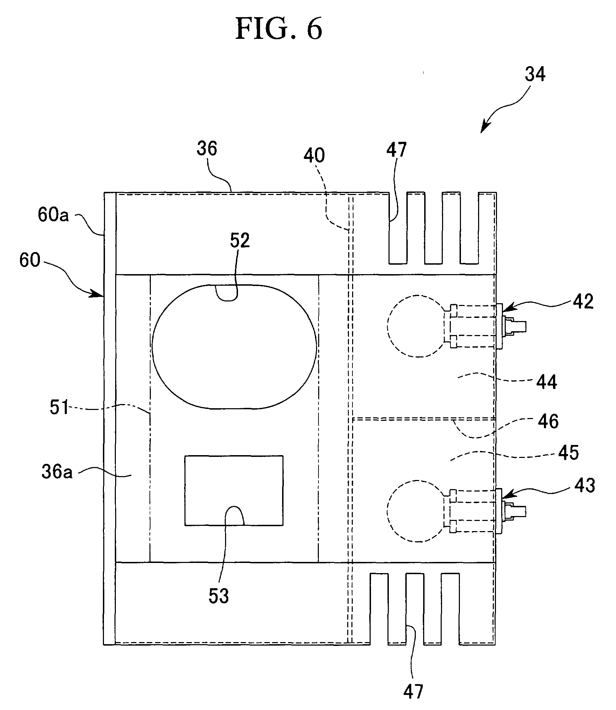

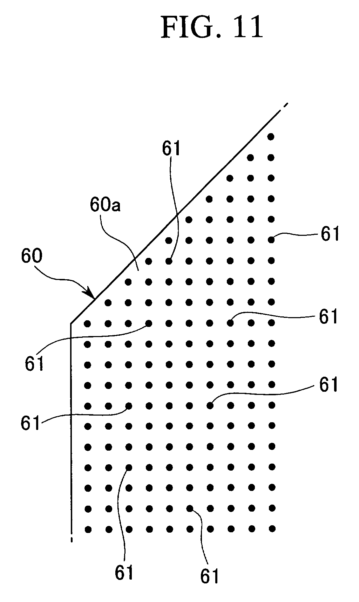

As is shown in FIGS. 4 and 6, each target display portion 34 is provided with a plate member in a sheet shape (i.e. a sheet shaped member) 60 provided parallel to the picture panel 40 at the front of the half mirror 57 (namely, at the front of the target 39) and at the front surface end portion of the casing 36. This plate member 60 is formed from a transparent plate such as an acrylic plate, glass plate, or the like whose front surface 60a has been printed such that a portion of the light irradiated from the imitation pistol 24 is allowed to pass through while the remainder is reflected. Specifically, as is shown in FIG. 11, a multitude of black dots 61 arranged at predetermined equal intervals in rows running in the horizontal and vertical directions are printed on the front surface 60a of the plate member 60. The transparent portions where the dots 61 are not printed allow a portion of the light irradiated from the imitation pistol 24 to pass through, while the dots 61 reflect the remainder of the light irradiated from the imitation pistol 24.

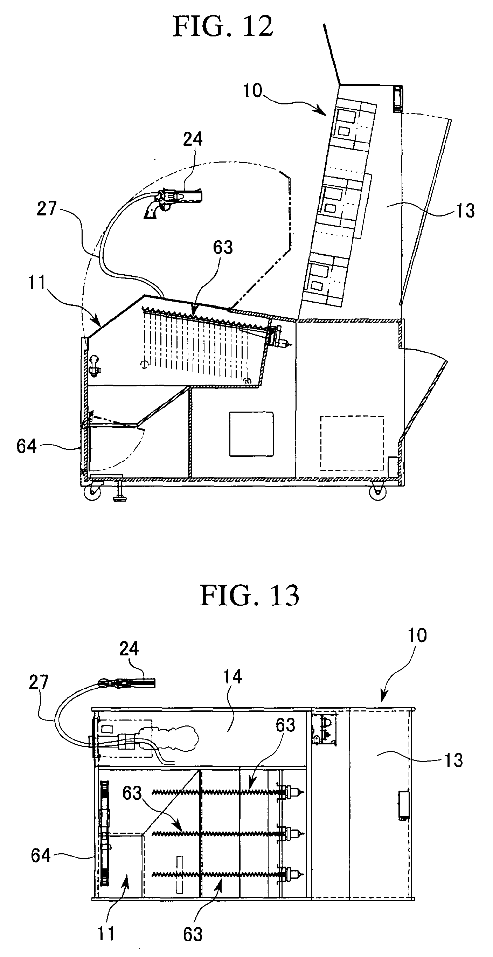

As is shown in FIGS. 12 and 13, the prize payout apparatus 11 holds prizes and comprises a plurality of (specifically, three) holding payout portions 63 arranged in a line that are capable of paying out the held prizes one by one. The prize payout apparatus 11 is thus able to payout a plurality of (specifically, three) types of prizes. A prize held in the holding payout portions 63 is paid out by driving the holding payout portion 63 that corresponds to a signal output from the CPU 17. The prize payout apparatus 11 is provided in the front thereof, as is shown in FIG. 1, with a prize payout aperture 64. All of the prizes paid out from the holding payout portions 63 are guided to the prize payout aperture 64 and removed from the prize payout aperture 64 by the player. Here, the holding payout portions 63 are divided into those for the first stage and those for the special stage (described below). Two holding payout portions 63 are allocated for the first stage and one for the special stage.

Next, the operation of the above described shooting game apparatus 10 and prize payout apparatus 11 will be described.

When a player inserts a predetermined coin into the coin insertion portion 26 of the operation portion 16, the operation portion 16 outputs a signal indicating that fact to the CPU 17. When it receives this signal, the CPU 17 starts one game. Firstly, the CPU 17 executes the first stage. At that time, a command signal is output to the sound generating portion 19 and the sound generating portion 19 then drives the sound output portion 32. A voice describing the contents of the first stage of the game is then generated and a predetermined target display portion 34 is placed in the notification display state. As a result, in this target display portion 34, only the first target portion 37 is displayed while being lit up by the irradiation of light from the first irradiation portion 42 positioned to the rear thereof so that the character of the first target portion 37 appears to be emitting the voice generated by the sound output portion 32. Here, at the start of each first stage, the player is required to perform an operation to select one of the prizes from a first stage holding payout portion 63 of the prize payout apparatus 11.

When an input is made into the operation portion 16 as to which of the prizes in the first stage holding payout portions 63 the player has selected in accordance with the sound from the sound output portion 32, the CPU 17 stores this selection in the RAM 20 and starts the first stage. Namely, the sound output portion 32 is driven by the sound generating portion 19 such that a sound notifying the start of the first stage is generated. At the same time, an initial value for the game time (for example, "30" representing 30 seconds) is displayed on the time display portion 31. This game time of the time display portion 31 is counted down at a fixed pace and the first stage is ended when the game time reaches "0".

During the execution of the first stage, the CPU 17 repeatedly executes for a predetermined number of times a display cycle in which either one or a plurality of the target display portions 34 that is placed in one of either the points addition display state or the points subtraction display state is selected and the display thereof is maintained for a predetermined time. Here, as is shown in FIG. 7, for a target display portion 34 that is set in a points addition display state, the first target portion 37 is displayed and the second target portion 38 is displayed together with the points 49a read from a map displayed in the non-picture portion 38a of the second target portion 38. As is shown in FIG. 9, for a target display portion 34 that is set in the points subtraction display state, only the first target portion 37 is displayed. Note that, to put it into other words, the above described limiting of the display to a predetermined time amounts to the limiting to a predetermined time of the display time of the target 39 in one display cycle of the display cycles that are always executed a plurality of times in a single game.

Moreover, if, during the predetermined time of one display cycle, light irradiated from the imitation pistol 24 is received by the light receiving sensor 56 provided in the target display portion 34 when the target display portion 34 is in the points addition display state, the CPU 17 determines that the target 39 of that target display portion 34 has been hit. The displayed points 49a are added to the score (the initial value of which is "0") stored in the RAM 20 at that point and the updated score is stored. At the same time, the score after the addition has been performed is displayed on the score display portion 33. Furthermore, this target display portion 34 is placed in the addition hit display state until the current display cycle has ended. Namely, as is shown in FIG. 8, the hit display 50a is displayed while the second target portion 38 is displayed with the points 49a displayed flashing on and off in the second target portion 38.

Further, if, during the predetermined time of one display cycle, light irradiated from the imitation pistol 24 is received by the light receiving sensor 56 provided in the target display portion 34 when the target display portion 34 is in the points subtraction display state, the CPU 17 determines that the target 39 of that target display portion 34 has been hit. A preset number of points are subtracted at that time from the score that is stored in the RAM 20 and the updated score is then stored. At the same time, the score after the subtraction has been performed is displayed on the score display portion 33. Furthermore, this target display portion 34 is placed in the subtraction hit state until the current display cycle has ended. Namely, as is shown in FIG. 10, only the hit display 50a is displayed.

Here, the CPU 17 repeatedly performs the above described display cycle a predetermined number of times, however, either one or a plurality of the target display portions 34 that is placed in one of either the points addition display state or the points subtraction display state is selected and displayed in each display cycle. Namely, various combinations are possible such as, in a single display cycle, at least one target display portion 34 being placed in the points addition display state while all the remaining target display portions 34 are placed in the non-display state. Alternatively, in a single display cycle, at least one target display portion 34 may be placed in the points subtraction display state while all the remaining target display portions 34 are placed in the non-display state. Alternatively, in a single display cycle, at least one target display portion 34 may be placed in the points addition display state and at least one target display portion 34 may be placed in the points subtraction display state while all the remaining target display portions 34 are placed in the non-display state.

The CPU 17, for example, is preset to execute any one of the above patterns in each display cycle and, at that time, which target display portion 34 is made to perform the respective displays is set at random.

Moreover, when the CPU 17 sets a plurality of target display portions 34 in the points addition state at the same time, the respective points 49a thereof are made to differ by the points 49a being read from a map having a plurality of map values. Naturally, in some cases, the points 49a end up the same depending on the map values that are read.

Furthermore, for those target display portions 34 that are to be set in the points addition display state, in each display cycle the CPU 17 alters the points of the target 39 by reading them from the map having the plurality of map values even for the same target 39. Naturally, in some cases, the points 49a end up the same depending on the map values that are read.

When each display cycle has ended, the CPU 17 alters the points 49a displayed on the target 39 in accordance with the number of hits by the imitation pistol 24 or with the score from the display cycles up until that time. Specifically, a map of the points for the number of hits or for the score from the display cycles up until that time is set and, if the number of hits or the score from the display cycles up until that time is small, the map is set such that somewhat higher points 49a are selected compared to if the number of hits or the score from the display cycles up until that time had been larger.

In addition, the CPU 17 drives the sound output portion 32 using the sound generating portion 19 such that individual sound effects are generated corresponding respectively to the operation of the trigger of the imitation pistol 24, a hit on the target display portion 34 in the points addition display state, and a hit on the target display portion 34 in the points subtraction display state.

As described above, a predetermined number of display cycles are executed during the game time of a single game. When the first stage has ended, the CPU 17 compares the score from the first stage (this score is calculated on the basis of the points of those targets hits by the imitation pistol 24) stored in RAM 20 with a preset threshold value and if the score from the first stage is less than the threshold value, then the current game is ended.

If, however, the score from the first stage is higher than the threshold value, the CPU 17 outputs a command signal to the sound generating portion 19 so that the sound output portion 32 is driven by the sound generating portion 19 and a notification sound is output urging the player to choose whether to continue the game or have a prize paid out to him or her. At this time also, by placing a predetermined target display portion 34 in the notification display state, the character of the first target portion 37 of this target display portion 34 appears to be emitting the voice generated by the sound output portion 32.

If, in accordance with this notification sound, the player inputs into the operation portion 16 the fact that he or she wishes the prize to be paid out and a signal indicating that the prize payout has been chosen is output from the operation portion 16, the CPU 17 outputs a command signal that accords with the contents stored in the RAM 20 before the first stage to the prize payout apparatus 11 via the external output portion 22. A holding payout portion 63 for the first stage of the prize payout apparatus 11 is then driven and one of the prizes held by that holding payout portion 63 is paid out and the current game is ended.

If, however, the player inputs into the operation portion 16 the fact that he or she wishes to continue the game and a signal indicating that continue game has been selected is output from the operation portion 16, the CPU 17 executes the special stage. Namely, in the same way as for the first stage, the contents to be executed for the special stage comprise a game involving shooting the targets 39 that are displayed while they are being lit up using the imitation pistol 24, however, for example, the game time may be shorter than in the first stage or the time of one display cycle may be shorter than in the first stage.

In addition, the points acquired in the special stage (namely, the points after the signal indicating continue game has been output from the operation portion 16) are sequentially added while the special stage is being executed to the score from the first stage (namely, to the score before the signal indicating continue game has been output from the operation portion 16) and the score is displayed on the score display portion 33 and also updated and stored in the RAM 20.

When the special stage is ended, the CPU 17 compares the score (the score calculated on the basis of the points of those targets hit by the imitation pistol 24) from the special stage stored in the RAM 20 with a preset second threshold value and, if the score is less than the second threshold value, then the current game is ended.

If, however, the score from the special stage is above the second threshold value, the CPU 17 outputs a command signal via the external output portion 22 to the prize payout apparatus 11 and the holding payout portion 63 for the special stage of the prize payout apparatus 11 is driven so that one of the prizes held by the holding payout portion 63 is paid out and the current game is then ended.

The shooting game apparatus 10 as described above achieves the following effects (1) to (12).
(1) Because the target display portion 34 displays the points 49a of the target 39 together with the target 39 even before the target is hit, even a player who is unfamiliar with the game is able to know the score he or she is acquiring from the points 49a displayed in each target 39 while the game is in progress. Accordingly, the player is able to play the game while feeling the thrill of seeing whether or not he or she can reach the target score. As a result, the amount of interest generated by the game is greatly increased.
(2) Because the target display portion 34 displays the points 49a of the target 39 together with the target 39 even before the target is hit, if, as described above, a player is able to fire at a plurality of simultaneously displayed targets 39 while different points 49a are displayed in each target 39, then the score differs depending on the order in which the targets are aimed at. Accordingly, the interest generated by the game is increased even more.
(3) Because the target display portion 34 always has a plurality of display cycles of the target 39 in a single game and the display time of the target 39 in one display cycle is restricted to a predetermined time, if, as described above, a player is able to fire at a plurality of displayed targets 39 while different points 49a are displayed in each target 39, then, because the time is restricted, the score always differs depending on the order in which the targets are aimed at. Accordingly, the interest generated by the game is increased still further.
(4) Because the target display portion 34 is able to alter the display of the points 49a of the target 39 that are displayed together with the target 39 even in the same target 39, it is possible to give different points to the same target 39 preventing a player from being able to memorize the points of each one of the targets 39. Accordingly, the interest generated by the game is increased still further.
(5) Because, in accordance with the number of hits by the imitation pistol 24 or with the result of the score calculation by the CPU 17 by a predetermined time, the target display portion 34 alters the points 49a of the target 39 that are displayed together with the target 39 after that predetermined time, then, for example, if the score partway through as calculated by the CPU 17 is low or if the number of hits partway through by the imitation pistol 24 is few, by altering the points 49a of the target 39 displayed thereafter so as to be higher or the like, it becomes possible even for a player unfamiliar with the game to achieve a reasonably high score.
(6) Because the target display portion 34 changes the form of the target 39 in accordance with the points such as, for example, the points addition time and the points subtraction time even in the same target 39, the player is able to recognize the points even in the form of the target 39.
(7) Because there is provided an external output portion 22 for outputting to the outside a signal based on the score calculated by the CPU 17, by connecting the prize payout apparatus 11 to the external output portion 22, as described above, it is possible for a prize to be paid out by the prize payout apparatus 11 when the score calculated by the CPU 17 is above a predetermined score. Accordingly, the interest generated by the game is increased still further.
(8) After the first stage, if a signal is output from the operation portion 16 to the effect that the player has chosen to continue playing the game, the CPU 17 executes a continuance of the game in which the targets 39 are hit using the imitation pistol 24. If, however, a signal is output from the operation portion 16 to the effect that the player has chosen to receive a prize, the CPU 17 cause a prize to be paid out by the prize payout portion 11. Accordingly, the number of choices available is increased to two, namely, whether to continue the game or receive a prize. Accordingly, the interest generated by the game is increased still further.
(9) After the first stage, if a signal is output from the operation portion 16 to the effect that the player has chosen to continue playing the game, the CPU 17 calculates the score by adding the points after this signal output to the score before this signal output.
   Therefore, it is possible when a game is continued for the score as well to be continued and added on to the previous score. As a result, because when the game is continued, it is possible for it to be treated as a follow on of the previous game, the interest generated by the game is increased still further.
(10) Because the target display portion 34 displays the target 39 by irradiating light from the rear of the picture panel 40, which faces the front, using the first irradiating portion 42 and the second irradiating portion 43, and displays points using the points display portion 49 provided further to the front than the picture panel 40 and at right angles to the picture panel 40, and also uses the half mirror 57 to display these points overlapping the target 39 and facing towards the front, no shadow from the points display portion 49 appears on the picture panel 40 because of the light irradiated by the first irradiating portion 42 and the second irradiating portion 43. Accordingly, it is possible for both the target 39 and the points 49a to be displayed clearly. Moreover, by providing the light receiving sensor 56 on the points display portion 49 side, it is possible to prevent the light receiving sensor 56 from being affected by the temperature generated by the first light irradiating portion 42 and the second light irradiating portion 43 and to place the points 49a and the light receiving sensor 56 on the same base plate.
(11) When light is irradiated from the imitation pistol 24 in the direction of a target 39 as a result of a player actually firing the imitation pistol 24, a portion of the irradiated light passes through the plate member 60 positioned at the front of the target 39 and a determination is made that a hit on the target 39 has been made. At the same time, the remaining portion of the irradiated light is reflected by the printing on the plate member 60. As a result, due to the reflected light generated by the plate member 60, a player is able to see with certainty the relationship between the target 39 and the point at which he or she is aiming with the imitation pistol 24 even in cases such as when the target itself is emitting light.
(12) Because the printing provided on the surface of the plate member 60 is formed from dots 61 arranged in rows at predetermined intervals, the target 39 as seen by the player through the plate member 60 is not difficult to discern in any way. Consequently, it is possible for a portion of the light from the imitation pistol 24 to be reliably reflected without the target 39 becoming difficult to see.
   Next, a description will be given, with reference mainly to FIG. 14, of the shooting game apparatus of the second embodiment of the present invention centering on those portions thereof that are different from the first embodiment. Note that those portions that are the same as in the first embodiment are given the same descriptive symbols and a description thereof is omitted.
   In the shooting game apparatus of the second embodiment of the present invention, in place of the display panel 13 having the structure described above, television monitors 66 comprising a CRT screen or a liquid crystal screen are used. The same displays as in the first embodiment are shown on these television monitors 66. Namely, the CPU 17 generates via an image generating portion 70 an image that includes the remaining game time and the points acquired by the player together with at least one of: a points addition display image such as that shown in FIG. 7 that includes the first target portion 37, the second target portion 38, and the points 49a; an addition hit display image such as that shown in FIG. 8 that includes the hit display 50a, the second target portion 38, and the flashing points 49a; a points subtraction display image such as that shown in FIG. 9 that only contains the first target portion 37; and a subtraction hit display image such as that shown in FIG. 10 that only contains the hit display 50a, and shows these on the television monitors 66.
   In combination with these, the imitation pistol 24 does not generate light by itself but is constructed such that the direction in which the imitation pistol 24 is aimed at is detected by the optical detection of display data within the screen of a television monitor 66.
   Furthermore, in the shooting game apparatus 10 of the second embodiment, a storage medium 67 such as a memory card or the like is removably connected instead of the prize payout apparatus 11 to the external output portion 22. Note that, because there is no prize payout apparatus 11 provided, in the shooting game apparatus 10 of the second embodiment, for example, only the above described first stage might be executed and the score at the point when the first stage ends then stored in the storage medium 67.
   According to the shooting game apparatus 10 of the second embodiment that has been altered in the manner described above, not only is it possible to achieve the above described affects (1) to (6), but the effect (13) described below can also be achieved.
(13) The shooting game apparatus 10 is provided with an external output portion 22 for outputting to the outside a signal on the basis of the score calculated by the CPU 17, and by connecting the storage medium 67 to the external output portion 22 as described above, it is possible to store information relating to a score in the storage medium 67. As a result, the interest generated by the game can be increased still further.

## Claims

1. A shooting game apparatus for shooting a target using an imitation pistol comprising:
display section (34) which is capable of displaying the target as well as points for the target;
determining section (17) which determines whether or not the target has been hit by a shot from the imitation pistol; and
calculating section (17) which calculates a score based on the points of the targets hit using the imitation pistol.

2. The shooting game apparatus according to claim 1, wherein the display section always has a plurality of display cycles of the target in a single game and the display time of the target in a single display cycle is restricted to a predetermined time.

3. The shooting game apparatus according to claim 1, wherein the display section is capable of altering the points for the target that are displayed together with the target even in the same target.

4. The shooting game apparatus according to claim 3, wherein the display section alters the points of the target that are displayed together with the target in accordance with a number of hits from the imitation pistol or with a result of the calculation of the score by the calculating section.

5. The shooting game apparatus according to claim 1, wherein, in accordance with the points, the display section changes a form of a target even in the same target.

6. The shooting game apparatus according to claim 1, wherein there is provided an external output section (22) for outputting signals to the outside based on the score calculated by the calculating section.

7. The shooting game apparatus according to claim 6, further comprising a prize payout section (11) which is connected to the external output section.

8. The shooting game apparatus according to claim 7, wherein there is provided an operation section (16) which inputs a choice made between whether to have a prize paid out or whether to continue a game, and when a signal indicating that continuing the game has been chosen is output from the operation section, the game in which the target is hit using the imitation pistol is continued.

9. The shooting game apparatus according to claim 8, wherein when a signal indicating that continuing the game has been chosen is output from the operation section, the calculating section calculates a score by adding points after the output of the signal to a score before the output of the signal.

10. The shooting game apparatus according to claim 1, wherein the display section comprises: a picture panel (40) on which the target is depicted and which faces towards the front; light irradiating section (42, 43) which irradiates light from the rear of the picture panel and causes the target to be displayed towards the front; points display section (49) that is positioned further to the front than the picture panel and at right angles to the picture panel and displays points; and a half mirror (57) that is positioned to the front than the picture panel and intersecting the picture panel and causes the points displayed by the points display section to be displayed towards the front.
